# EUROPEAN PATENT APPLICATION

(11) **EP 4 541 469 A1**
(43) Date of publication of application: **23.04.2025**
(21) Application number: 23821868.9
(22) Date of filing: 13.06.2023
(51) Int. Cl.: B09B 5/00, B29B 17/02, B09B 101/16, B29B 17/04

(54) **BATTERY CELL DISCARDING DEVICE INCLUDING INPUT PART ENABLING DISPERSION INPUT**

(30) Priority: 14.06.2022 KR 20220072082
(71) Applicant: LG Energy Solution, Ltd., Seoul 07335 (KR)
(72) Inventor: LEE, Jung Soo, Daejeon 34122 (KR)
(74) Representative: Goddar, Heinz J.
(86) International application number: PCT/KR2023/008128
(87) International publication number: WO 2023/243993

(57) **Abstract**

The present invention relates to a battery cell disposal apparatus including an input unit configured to allow distributed input to be performed therethrough and a battery cell input method using the same. The battery cell disposal apparatus includes an input unit configured to allow a battery to be input therethrough and a processing unit configured to process the battery cell input through the input port. The input unit includes an input port including an input hole provided in a central part thereof and an input slope inclined downwards toward the input hole, the input port being formed in a truncated conical shape or a truncated polypyramid shape, a distribution guide located under the input hole, the distribution guide being formed in a horn shape, the distribution guide having an apex provided at an upper surface thereof, and at least one connecting shaft configured to connect an edge of the input hole and an edge of the distribution guide to each other.

## Description

### [Technical Field]

This application claims the benefit of priority to Korean Patent Application No. 2022-0072082 filed on June 14, 2022, the disclosure of which is incorporated herein by reference in its entirety.

The present invention relates to a battery cell disposal apparatus including an input unit configured to allow distributed input to be performed therethrough and a battery cell input method using the same. More particularly, the present invention relates to a battery cell disposal apparatus including an input unit configured to allow distributed input to be performed therethrough capable of inputting a large number of battery cells into a processing unit in a distributed state, thereby preventing short circuit and explosion due to contact between the battery cells, and a battery cell input method using the same.

### [Background Art]

Battery cell usage is growing exponentially. At the same time, the number of battery cells that need to be disposed of is also growing rapidly. Waste batteries must be professionally disposed of for recycling and environmental reasons.

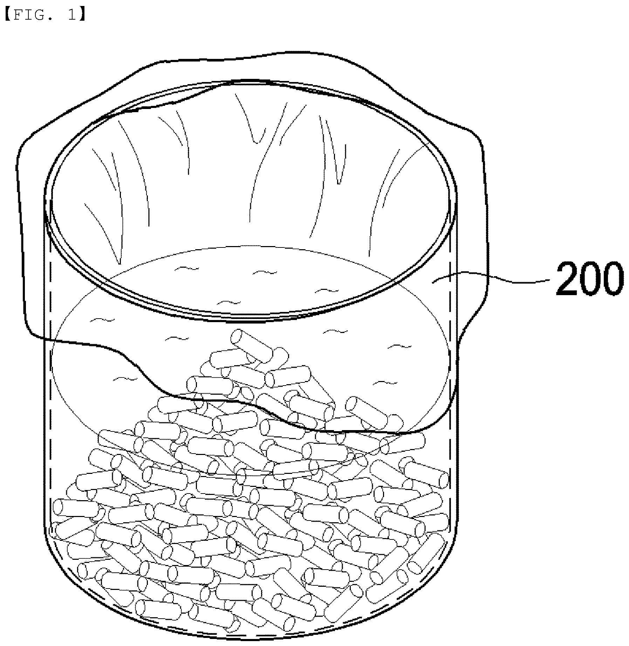

FIG. 1 is a perspective view of a conventional battery cell disposal apparatus 10. Referring to FIG. 1, the conventional battery cell disposal apparatus 10 disposes of waste batteries by inputting the waste batteries into a processing unit 200 in which an acid solution is stored, discharging the waste batteries, drying the waste batteries, and crushing the waste batteries.

When a large number of waste batteries is input to the processing unit 200 at the same time, a short circuit discharge accident may occur due to contact between the waste batteries. In addition, an accident related to safety of a worker and environmental pollution due to scattering of an acid solution during input must be considered.

Patent Document 1 discloses a waste lithium battery disposal apparatus for disposing of waste lithium batteries by inputting, drilling, cutting, and discharging the waste lithium batteries. In Patent Document 1, waste lithium batteries are supplied into a process chamber through a battery input unit and a battery supply unit, and a discharge unit provided in the process chamber discharges the waste lithium batteries by drilling and cutting the waste lithium batteries, whereby the waste lithium batteries are disposed of. In Patent Document 1, which is intended to prevent a safety-related accident caused by a wet processing method using an acid solution, the safety-related accident is prevented using a non-wet processing method. However, an additional disposal apparatus, i.e., the process chamber, for processing the waste lithium batteries, such as drilling and cutting, is required, whereby equipment manufacturing costs are increased, maintenance costs due to replacement of operating parts over a period of time are increased, and a larger space for the disposal apparatus is needed.

Currently, most waste batteries are disposed of using an acidic solution, and there is a need for a simple yet effective solution that can be easily adapted to this environment.

### (Prior Art Document)

Korean Patent Application Publication No. 2018-0084235 ("Patent Document 1")

### [Disclosure]

### [Technical Problem]

The present invention has been made in view of the above problems, and it is an object of the present invention to provide a battery cell disposal apparatus capable of inhibiting damage caused by short circuit between a large number of battery cells even when the battery cells are input to the battery cell disposal apparatus and preventing a safety-related accident due to scattering of an acid solution and a battery cell input method using the same.

### [Technical Solution]

In order to accomplish the above object, the present invention provides a battery cell disposal apparatus including an input unit configured to allow a battery to be input therethrough and a processing unit configured to process the battery cell input through the input unit, wherein
the input unit includes an input port including an input hole provided in a central part thereof and an input slope inclined downwards toward the input hole, a distribution guide located under the input hole, the distribution guide being formed in a horn shape, the distribution guide having an apex provided at an upper surface thereof, and at least one connecting shaft configured to connect an edge of the input hole and an edge of the distribution guide to each other.

The input unit may include a corrosion-resistant material or may be coated with a corrosion-resistant material, wherein the corrosion-resistant material may be at least one selected from the group consisting of a polyolefin resin and glass.

The input port may have a truncated conical shape or a truncated polypyramid shape.

The length of a lower surface of the distribution guide may be equal to or greater than the size of the input hole.

The distribution guide may have a conical shape or a polypyramid shape, the apex of the distribution guide may be located on a vertical extension line of the input hole, and a vertical line of the center of the distribution guide and a vertical line of the center of the input hole may be the same.

The input unit and the processing unit may be coupled to each other, and a curtain portion made of a corrosion-resistant resin material may be added to an upper outer periphery of the input unit so as to extend therefrom or to be coupled thereto, the curtain portion being configured to prevent a solution in the processing unit from splashing to the outside.

An acid solution, specifically a sulfuric acid aqueous solution, may be stored in the processing unit.

In addition, the present invention provides a battery cell disposal method using the battery cell disposal apparatus according to the present invention.

The disposal may include dissolution of an outer cover of the battery cell and decomposition of a case of the battery cell.

The present invention may provide any combinations of the above solving means.

### [Advantageous Effects]

As is apparent from the above description, the present invention is capable of providing a battery cell disposal apparatus including an input hole, an input slope, and a distribution guide, wherein a large number of battery cells is input to a processing unit in a distributed state, whereby it is possible to prevent a short circuit discharge accident between the battery cells.

Also, in the present invention, it is possible to prevent scattering of an acid solution to the outside due to input of the battery cells, and therefore it is possible to prevent an accident related to safety of a worker.

### [Description of Drawings]

FIG. 1 is a perspective view of a conventional battery cell disposal apparatus.
FIG. 2 is an exploded perspective view of a battery cell disposal apparatus according to a first embodiment of the present invention.
FIG. 3 is a sectional view of the battery cell disposal apparatus according to the first embodiment of the present invention.
FIG. 4 is an exploded perspective view of a battery cell disposal apparatus according to a second embodiment of the present invention.
FIG. 5 is a sectional view of the battery cell disposal apparatus according to the second embodiment of the present invention.
FIG. 6 is an exploded perspective view of a battery cell disposal apparatus according to a third embodiment of the present invention.
FIG. 7 is a sectional view of the battery cell disposal apparatus according to the third embodiment of the present invention.
FIG. 8 is a schematic view showing the cases in which battery cells are disposed of in the conventional battery cell disposal apparatus and the battery cell disposal apparatus according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains.

In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery cell disposal apparatus according to the present invention will be described with reference to the accompanying drawings.

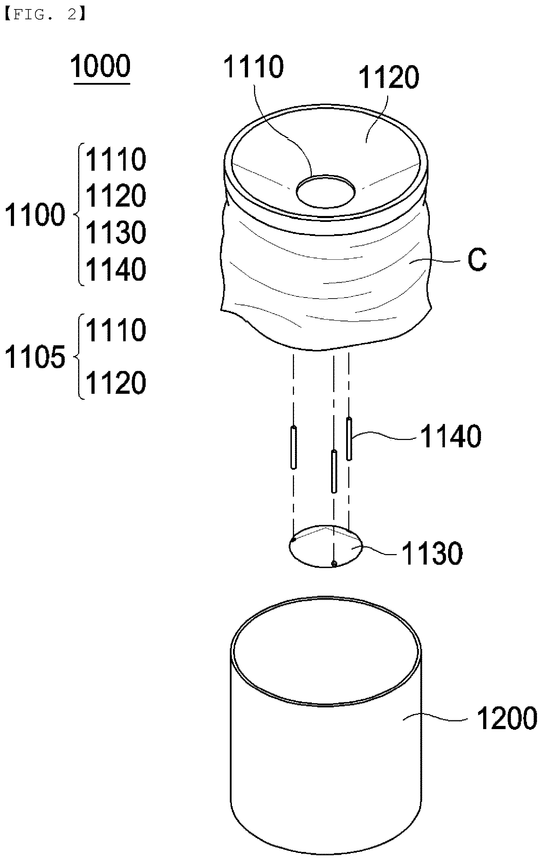

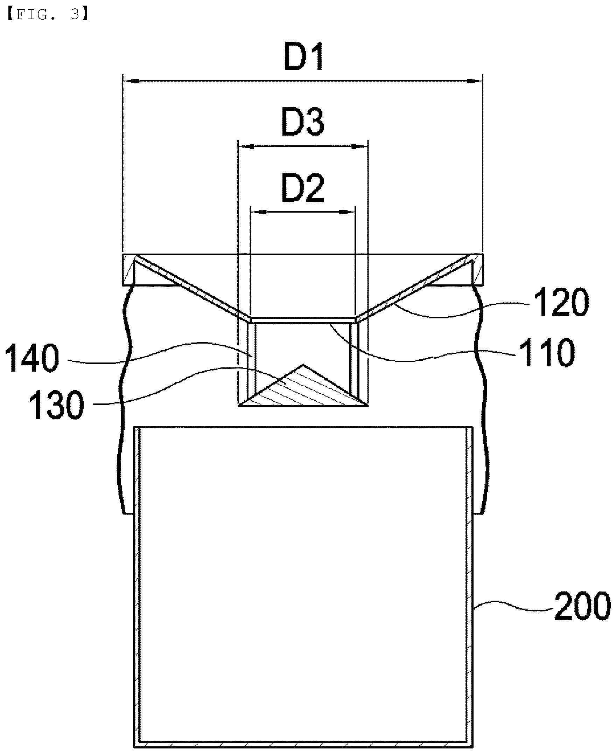

FIG. 2 is an exploded perspective view of a battery cell disposal apparatus 1000 according to a first embodiment of the present invention, and FIG. 3 is a sectional view of the battery cell disposal apparatus 1000 according to the first embodiment of the present invention.

For reference, FIGS. 3, 5, and 7 do not show the states that the input units 1100, 2100, and 3100 are not completely coupled to processing units 1200, 2200, and 3200, respectively, but the states immediately before coupling therebetween. When each of the input units 1100, 2100, and 3100 and a corresponding one of the processing units 1200, 2200, and 3200 are coupled to each other, an upper outer periphery, an inside, or a lower end of each of the input units 1100, 2100, 3100 is in contact with a corresponding one of the processing units 1200, 2200, and 3200.

Referring to FIGS. 2 and 3, the battery cell disposal apparatus 1000 according to the first embodiment of the present invention includes an input unit 1100 and a processing unit 1200.

The input unit 1100 may include a corrosion-resistant material or may be coated with a corrosion-resistant material, and may include an input hole 1110, an input slope 1120, a distribution guide 1130, and a connecting shaft 1140. The input hole 1110 and the input slope 1120 constitute an input port 1105.

The corrosion-resistant material may be at least one selected from the group consisting of a polyolefin resin and glass. Not only an upper surface of the input unit 1100 but also a lower part of the input unit, which faces the processing unit 1200, may include a corrosion-resistant material or may be coated with a corrosion-resistant material.

A curtain portion C made of a corrosion-resistant resin material extends from or is coupled to the upper outer periphery of the input unit 1100. The curtain portion C has the advantage of preventing an acid solution in the processing unit 1200 from splashing to the outside and guiding the acid solution so as to flow along the curtain portion C to the floor instead of splashing high even though the acid solution splashes, thereby preventing an accident related to safety of a worker. The curtain portion C is removably coupled thereto.

The input hole 1110, which is a hole located in the center of the input unit 1100, may send a large number of battery cells input to the input unit 1100 to the processing unit 1200.

Each of the battery cells may be, but is not limited to, a cylindrical, prismatic, or pouch-shaped battery cell. The cylindrical or prismatic battery cell includes a metal cell case configured to receive an electrode assembly, the metal cell case being electrically connected to a negative electrode lead of the electrode assembly, and a top cap located on top of the cell case.

The top cap is not electrically conducted to the cell case due to an insulating member, and is electrically connected to a positive electrode lead and/or the negative electrode lead of the electrode assembly, whereby the top cap acts as a positive electrode terminal.

In order for the cell case and the top cap to be fixed to each other, an upper surface of the cell case is located along an outer periphery of the top cap in the state in which an insulating member is interposed therebetween. It is preferable for the top cap to protrude farther than the upper surface of the cell case, and it is more preferable for a positive electrode terminal projecting upwards to be further provided in the center of the top cap.

The electrode assembly includes a cell assembly and leads, and the cell assembly may be a jelly-roll type cell assembly, which is configured to have a structure in which a long sheet type positive electrode and a long sheet type negative electrode are wound in the state in which a separator is interposed therebetween, a stacked type cell assembly including unit cells, each of which is configured to have a structure in which a rectangular positive electrode and a rectangular negative electrode are stacked in the state in which a separator is interposed therebetween, a stacked and folded type cell assembly, which is configured to have a structure in which unit cells are wound using a long separation film, or a laminated and stacked type cell assembly, which is configured to have a structure in which unit cells are stacked in the state in which a separator is interposed therebetween and are then attached to each other; however, the present invention is not limited thereto.

In a pair of leads constituted by a positive electrode lead and a negative electrode lead, the positive electrode lead is directly and indirectly connected to the positive electrode of the cell assembly and the top cap, and the negative electrode lead is electrically connected to the cell case. The electrode assembly constituting the cylindrical battery cell is generally known, and therefore a more detailed description thereof will be omitted.

The battery cell disposal apparatus according to the present invention may also dispose of pouch-shaped battery cells for disposal after use as needed.

The input slope 1120, which is conical in shape, is inclined downwards from an edge of the input unit 1100 toward the input hole 1110 located in a central part of the input unit 1100.

Since the input slope 1120 is formed, a large number of battery cells does not stay on the upper surface of the input unit 1100 but moves toward the input hole 1110 when the battery cells are input, whereby the battery cells may be rapidly and accurately moved to the processing unit 1200. In addition, the battery cells on the slope may be slowly moved along the slope instead of being abruptly moved all at once.

The surface of the input slope 1120 may be provided with a straight or spiral protrusion or groove (not shown) extending to the input hole 1110 in order to guide the movement of the battery cells.

The input port 1105, which is constituted by the input hole 1110 and the input slope 1120, is generally formed in the shape of a truncated cone or a truncated polypyramid. Specifically, an upper surface of the input port may be larger. FIGS. 2 and 3 show the truncated cone.

The distribution guide 1130, which is formed in the shape of a cone with an apex provided at a central part of an upper surface thereof, may be located under the input hole 1110 so as to be spaced apart therefrom.

The distribution guide 1130 may be located under the input hole 1110, as described above, to ensure that battery cells input for disposal are distributed throughout the processing unit 1200, thereby preventing a large number of battery cells from being input in one direction, such as the center or edge of the processing unit 1200 and thus preventing short circuit between the battery cells.

The distribution guide 1130 is preferably made of a soft surface material rather than a hard surface material. A battery cell falling through the input hole 1110 may collide with the surface of the distribution guide 1130, may bounce upwards, and may collide with another falling battery cell. For this reason, it is preferable for the distribution guide 1130 to be made of a soft surface material. In order to achieve a similar effect, the connecting shaft 1140 may be made of an elastic material.

The length of the connecting shaft 1140 should be at least long enough to allow a battery cell falling through the input hole 1110 to be distributed into the surrounding area after colliding with the distribution guide 1130, and should be short enough to prevent the distribution guide 1130 from contacting the acidic solution in the processing unit 1200.

The apex of the distribution guide 1130 may be located on a vertical extension line of the input hole 1110, and more preferably, a vertical line of the center of the distribution guide 1130 and a vertical line of the center of the input hole 1110 are the same.

Preferably, the length D3 of a lower surface of the distribution guide 1130 is equal to or greater than the size D2 of the input hole 1110, in which case battery cells do not fall directly into the processing unit 1200 but fall after colliding with the distribution guide 1130 once. If the length D3 of the lower surface of the distribution guide 1130 is less than the size D2 of the input hole 1110, battery cells may fall directly into the processing unit 1200, whereby the acid solution in the processing unit 1200 may leak outside the disposal apparatus, causing an accident related to safety of a worker.

Specifically, the lower area of the distribution guide 1130 is equal to or greater than the area of the input hole 1110, and when the distribution guide 1130 and the input hole 1110 are projected horizontally, the lower surface of the distribution guide 1130 must include all sides of the input hole 1110.

The surface of the distribution guide 1130 may be provided with a straight or spiral shaped protrusion or groove (not shown) in order to guide the movement of battery cells.

The distribution guide 1130 may be further provided with a wing-shaped guide (not shown) extending along the outer periphery thereof, wherein the wing-shaped guide may further prevent scattering of the acid solution.

The connecting shaft 1140 may be rod-shaped and may connect an edge of the input hole 1110 and an edge of the distribution guide 1130 to each other in order to support and fix the distribution guide 1130.

The position of the distribution guide 1130 may be set based on the position at which the connection shaft 1140 and the distribution guide 1130 are connected to each other and the length of the connection shaft 1140.

At least one connecting shaft 1140 may be provided to connect the input hole 1110 and the distribution guide 1130 to each other. Preferably, three or four connecting shafts are provided. If less than three connection shafts 1140 are provided, the support force and the fixation force between the input hole 1110 and the distribution guide 1130 may be weak, and if more than four connection shafts are provided, the movement path of battery cells that are input may be interfered with. If two connection shafts are provided, the distribution guide 1130 may not be fixed and may be rotated when battery cells are input.

The processing unit 1200 may be cylindrical in shape with an open upper surface, and an acid solution for disposal of battery cells input thereinto, specifically a sulfuric acid aqueous solution, may be stored in the processing unit.

The acid solution in the processing unit 1200 dissolves or decomposes an outer cover and a case of each battery cell input to the processing unit.

The acid solution dissolves or corrodes each input battery cell so as to be disposed of, and in the case of thionyl chloride, which is used as a negative electrode, thionyl chloride reacts with water to become acidic, and therefore continuous reprocessing may be accomplished by simply adding water without supplemental sulfuric acid.

Although not shown in the figures, a vibrator configured to apply vibration to the entirety of the battery cell disposal apparatus may be further added in order to smoothly input battery cells.

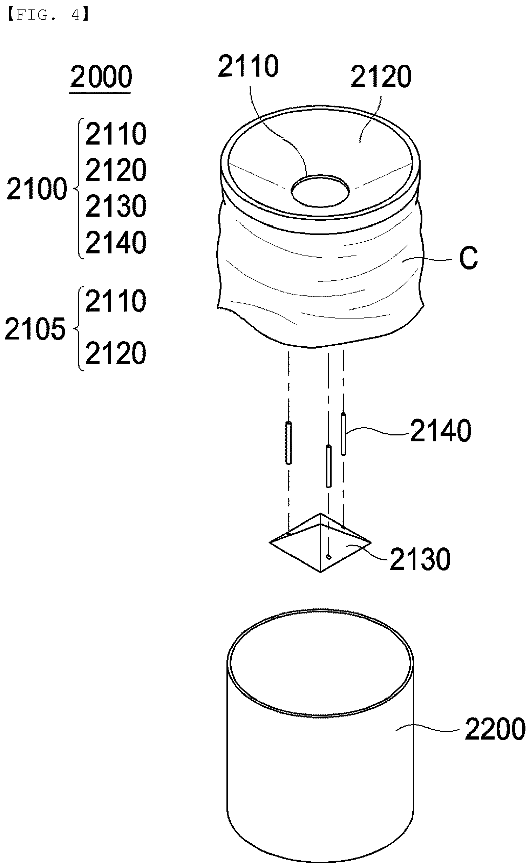

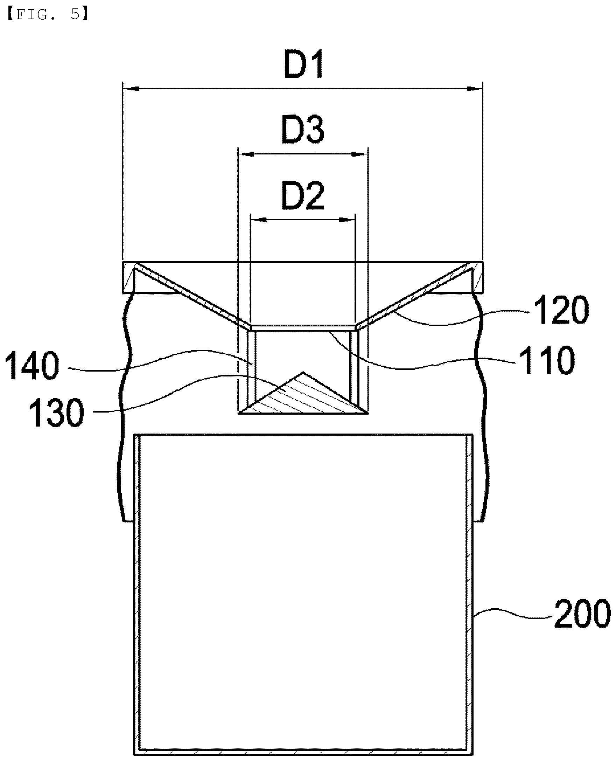

FIG. 4 is an exploded perspective view of a battery cell disposal apparatus 2000 according to a second embodiment of the present invention, and FIG. 5 is a sectional view of the battery cell disposal apparatus 2000 according to the second embodiment of the present invention.

Referring to FIGS. 4 and 5, the battery cell disposal apparatus according to the second embodiment of the present invention is identical to the battery cell disposal apparatus 1000 according to the first embodiment described with reference to FIGS. 2 and 3 except for the shape of a distribution guide 2130, and therefore a description of the same configuration will be omitted.

An input unit 2100 of the battery cell disposal apparatus 2000 according to the second embodiment of the present invention includes an input hole 2110, an input slope 2120, a distribution guide 2130, and a connection shaft 2140.

The distribution guide 2130 according to the second embodiment of the present invention is formed in the shape of a quadrangular pyramid, which has the advantage of being able to intentionally set an input direction of battery cells, resulting in a more even distribution of the battery cells. The quadrangular pyramid is an example, and transformation into a polypyramid, such as a triangular pyramid, a pentagonal pyramid, or a hexagonal pyramid, may be possible in addition to the quadrangular pyramid.

The figures show three connecting shafts 2140, but four connecting shafts may be provided as needed.

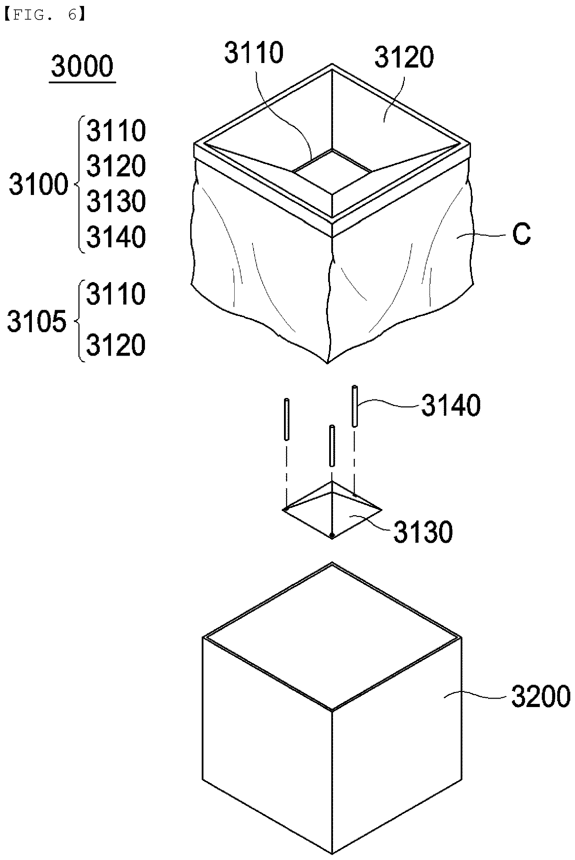

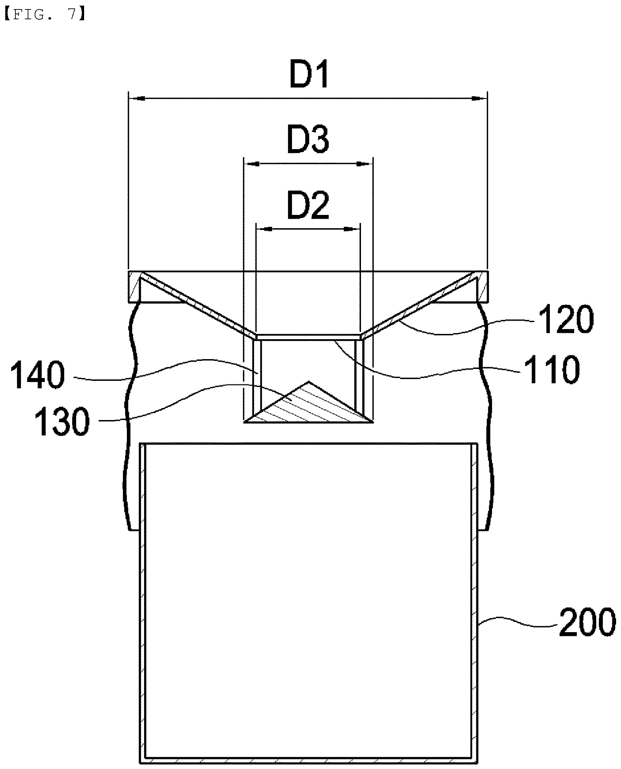

FIG. 6 is an exploded perspective view of a battery cell disposal apparatus 3000 according to a third embodiment of the present invention, and FIG. 7 is a sectional view of the battery cell disposal apparatus 3000 according to the third embodiment of the present invention.

Referring to FIGS. 6 and 7, the battery cell disposal apparatus 3000 according to the third embodiment of the present invention is identical to the battery cell disposal apparatus according to the first embodiment described with reference to FIGS. 2 and 3 except for the shape of an input unit 3100 and a processing unit 3200, and therefore a description of the same configuration will be omitted.

The battery cell disposal apparatus 3000 according to the third embodiment of the present invention includes an input unit 3100 and a processing unit 3200, wherein the input unit 3100 includes an input hole 3110, an input slope 3120, a distribution guide 3130, and a connecting shaft 3140.

The input hole 3110 and the input slope 3120 constitute an input port 3105. The input port 3105 is formed in the shape of a truncated quadrangular pyramid. The input slope 3120 is flat and inclined downwards from an edge of the input unit 3100 toward the input hole 3130.

The distribution guide 3130 is formed in the shape of a quadrangular pyramid, whereby an input direction of battery cells may be intentionally set, and therefore it is possible to more evenly distribute the battery cells.

The processing unit 3200 may be formed in the shape of a quadrangular barrel with an open upper surface, and an acid solution may be stored in the processing unit.

As such, the battery cell disposal apparatus according to the third embodiment has the advantage in that the input port 3105 is formed in the shape of a truncated quadrangular pyramid, the input slope 3120 is flat, and the processing unit 3200 is formed in the shape of a quadrangular barrel, whereby, when a plurality of battery cell disposal apparatuses is installed, it is possible to more efficiently use the space occupied by the battery cell disposal apparatuses.

The input unit, the distribution guide, and the processing unit mentioned in the above embodiment may be coupled to each other in any form, and are not limited to the above embodiment.

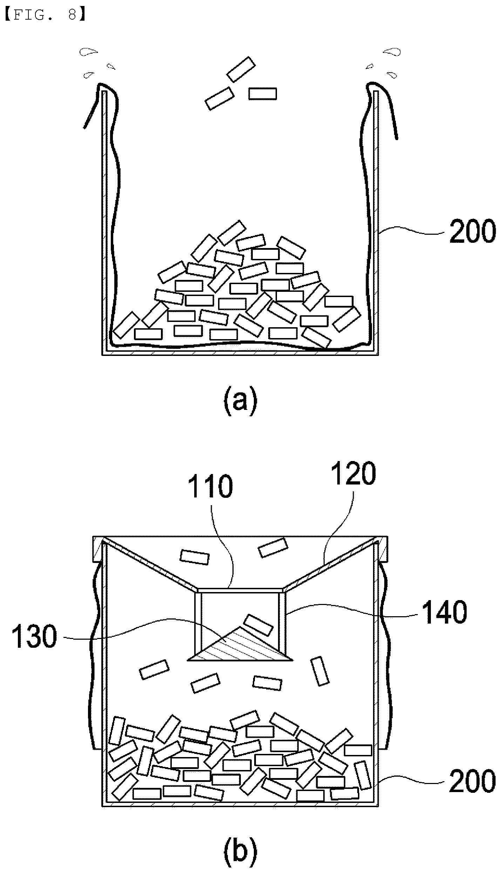

FIG. 8 is a schematic view showing the cases in which battery cells are disposed of in the conventional battery cell disposal apparatus and the battery cell disposal apparatus according to the present invention.

Referring to FIG. 8, in the conventional battery cell disposal apparatus 10, the acid solution stored in the processing unit 200 may scatter when the battery cells are input to the processing unit 200, whereby an accident related to safety of a worker may occur, as shown in (a) of FIG. 8. In addition, after the battery cells are input, the battery cells are concentrated at one point, which may cause damage, such as explosion of the battery cells.

As shown in (b) of FIG. 8, the present invention has the advantage in that the input unit 1100 including the distribution guide 1130 is provided at an upper side of the processing unit 1200, whereby the battery cells may be stacked in the processing unit 1200 in a distributed state, and therefore it is possible to prevent damage, such as explosion of the battery cells, and the curtain portion C is provided at the input unit 1100 so as to extend therefrom or to be coupled thereto, whereby scattering of the acid solution due to input of the battery cells is prevented, and therefore it is possible to prevent an accident related to safety of a worker.

In addition, the present invention may provide a battery cell input method or a battery cell disposal method using the battery cell disposal apparatus.

The battery cell input method or the battery cell disposal method using the battery cell disposal apparatus may include the steps of inputting a battery cell through the input unit, waiting for the battery cell to be dissolved or decomposed and to be stabilized, and drying and crushing the dissolved or decomposed battery cell.

In FIGS. 2 to 8, the input port 1105, 2105, or 3105 is shown as being formed in the shape of a truncated cone or a truncated quadrangular pyramid; however, the input port may be formed in the shape of a truncated polypyramid, such as a truncated triangular pyramid or a truncated pentagonal pyramid as long as input battery cells can be moved along the input slope 1120, 2120, or 3120 toward the input hole 1110, 2110, or 3110.

In FIGS. 2 to 8, the distribution guide 1130, 2130, or 3130 is shown as being formed in the shape of a cone or a quadrangular pyramid; however, the distribution guide may be formed in the shape of a polypyramid, such as a triangular pyramid or a pentagonal pyramid as long as input battery cells can be stacked in the processing unit 1200, 2200, or 3200 in a distributed state.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

10, 1000, 2000, 3000: Battery cell disposal apparatuses
1100, 2100, 3100: Input units
1105, 2105, 3105: Input ports
1110, 2110, 3110: Input holes
1120, 2120, 3120: Input slopes
1130, 2130, 3130: Distribution guides
1140, 2140, 3140: Connecting shafts
1200, 2200, 3200: Processing units
C: Curtain portion
D1: Diameter of upper side of input slope
D2: Size of input slope
D3: Diameter of lower surface of distribution guide, length of section of distribution guide

## Claims

1. A battery cell disposal apparatus comprising:
an input unit configured to allow a battery to be input therethrough; and
a processing unit configured to process the battery cell input through the input port, wherein
the input unit comprises:
an input port comprising an input hole provided in a central part thereof and an input slope inclined downwards toward the input hole;
a distribution guide located under the input hole, the distribution guide being formed in a horn shape, the distribution guide having an apex provided at an upper surface thereof; and
at least one connecting shaft configured to connect an edge of the input hole and an edge of the distribution guide to each other.

2. The battery cell disposal apparatus according to claim 1, wherein the input unit comprises a corrosion-resistant material or is coated with a corrosion-resistant material.

3. The battery cell disposal apparatus according to claim 2, wherein the corrosion-resistant material is at least one selected from a group consisting of a polyolefin resin and glass.

4. The battery cell disposal apparatus according to claim 1, wherein the input port has a truncated conical shape or a truncated polypyramid shape.

5. The battery cell disposal apparatus according to claim 1, wherein a length of a lower surface of the distribution guide is equal to or greater than a size of the input hole.

6. The battery cell disposal apparatus according to claim 6, wherein the distribution guide has a conical shape or a polypyramid shape.

7. The battery cell disposal apparatus according to claim 1, wherein the apex of the distribution guide is located on a vertical extension line of the input hole.

8. The battery cell disposal apparatus according to claim 7, wherein a vertical line of a center of the distribution guide and a vertical line of a center of the input hole are the same.

9. The battery cell disposal apparatus according to claim 1, wherein the input unit and the processing unit are coupled to each other.

10. The battery cell disposal apparatus according to claim 1, wherein a curtain portion made of a corrosion-resistant resin material is added to an upper outer periphery of the input unit so as to extend therefrom or to be coupled thereto, the curtain portion being configured to prevent a solution in the processing unit from splashing to an outside.

11. The battery cell disposal apparatus according to claim 1, wherein an acid solution is stored in the processing unit.

12. A battery cell disposal method using the battery cell disposal apparatus according to any one of claims 1 to 11.

13. The battery cell disposal method according to claim 12, wherein the disposal comprises dissolution of an outer cover of the battery cell and decomposition of a case of the battery cell.
